# EUROPEAN PATENT APPLICATION

(11) **EP 1 553 502 A2**
(43) Date of publication of application: **13.07.2005**
(21) Application number: 04256355.1
(22) Date of filing: 15.10.2004
(51) Int. Cl.: G06F 15/78, G06F 9/445

(54) **Reconfigurable signal processing module**

(30) Priority: 17.10.2003 GB 0324359
(71) Applicant: Kabushiki Kaisha Toshiba, Tokyo 105-8001 (JP)
(72) Inventor: Dolwin, Anthony Craig, Bristol BS1 4ND (GB); Burgess, Rollo, Bristol BS1 4ND (GB); Fitton, Michael Philip, Bristol BS1 4ND (GB)
(74) Representative: Midgley, Jonathan Lee

(57) **Abstract**

The present invention relates to re-configurable signal processing modules in particular, although not exclusively, for wireless communications terminals. In general terms in one aspect the present invention provides a system for reconfiguring a signal processing module having a number of re-configurable resources such as re-configurable hardware blocks including ASIC's and field programmable logic gate arrays (FPGA's), as well as software modules for implementing different functions and which can be run on a DSP or other processing platform within the signal processing module. The module may be a mobile terminal or a base station in a wireless communications system for example. The system comprises means for generating a commands data structure comprising configuration commands for the resources, and may further comprise means for communicating this data structure to the signal processing module. The module has means for reconfiguring itself using this data structure. Typically the data structure will be a process timetable having time stamped configuration and run-time commands suitable for being dispatched to the appropriate resource.

## Description

The present invention relates to re-configurable signal processing modules in particular, although not exclusively, for wireless communications terminals.

Given the growth in the methods of communicating wirelessly, including for example via cellular communications or wireless local area networks, there is a growing need for wireless terminals to be able to accommodate the growing number of wireless protocols. This is exacerbated by regional differences in the protocols used and the increasing desire to have a wireless terminal that can roam globally. For example whilst the new third generation cellular communications basic technology used in both North America and Europe is CDMA based, the specific air interface protocols are different. Similarly there are various versions of wireless local area networks such as IEEE 802.11a, b and g, as well as Hiperlan, and Bluetooth.

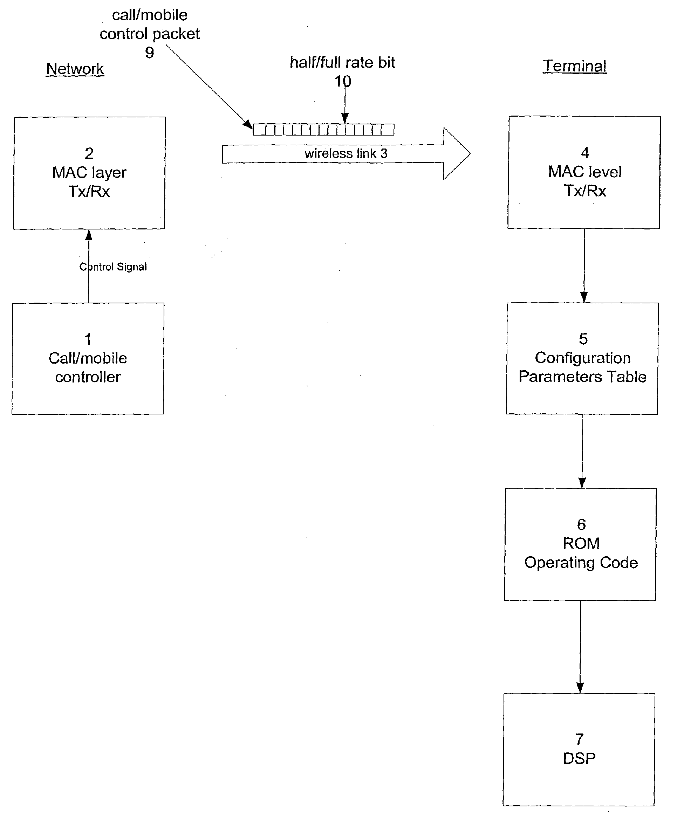

In known mobile phones and other wireless terminals the functionality within the terminal is fixed at design time for a range of anticipated functions. The available optional functions are switched on or off using signalling. This is illustrated in Figure 1 where a call controller 1 instructs a terminal to use a half or full rate vocoder using a dedicated bit or control word (identifying which vocoder to use) in a control packet sent between the network and the terminal. In the example shown, transceivers 2 and 4 at the network and terminal respectively communicate control signals over a wireless link 3 at the data link level (layer 2), typically known in wireless communications as the media access control (MAC) layer. The vocoder setting signal is relayed to a configuration parameters table 5. Operations code 6 queries this table 5 when run in order to implement either a half or full rate vocoder (or other functionality change). The code 6 is hard coded or pre-installed on a ROM for example and contains branches which will execute different sequences of operations depending on the control signalling received from the network. The code 6 is run on a digital signal processing (DSP) platform 7 within the terminal to implement the terminal's functionality. It can be seen that the flexibility of such a system is limited.

WO 01/90891 discloses a more sophisticated method of control signalling between the network and a wireless terminal in order to implement a greater variety of functionality. Higher layer signalling is used to negotiate configuration requests for the terminal. A management module is used in the terminal to negotiate the reconfiguration and control the real-time behaviour and control signalling of the terminal. The signalling operations appear to be used to define operating parameters for the terminal, however no implementation detail is disclosed. In related patent document WO 01/90890, a reconfiguration handler is disclosed which implements the above-described signalling, again however specific implementation detail is limited.

In general terms in one aspect the present invention provides a system for reconfiguring a signal processing module having a number of re-configurable resources such as re-configurable hardware blocks including ASIC's and field programmable logic gate arrays (FPGA's), as well as software modules for implementing different functions and which can be run on a DSP or other processing platform within the signal processing module. The module may be a mobile terminal or a base station in a wireless communications system for example. The system comprises means for generating a commands data structure comprising configuration commands for the resources, and may further comprise means for communicating this data structure to the signal processing module. The module has means for reconfiguring itself using this data structure. Typically the data structure will be a process timetable having time stamped configuration and run-time commands suitable for being dispatched to the appropriate resource.

The signal processing module is preferably a wireless terminal having means for receiving the data structure wirelessly from the network. Alternatively the signal processing module may be coupled to a portable processing platform such as a laptop computer which itself is able to generate the required data structure and to provide this directly to the module. Various other configurations will be implementable by those skilled in the art. When the data structure is communicated over a communications link, this is preferably communicated as data traffic as opposed to signalling instructions which allows greater flexibility in the functionality that can be implemented in the terminal. It also allows the terminal to be upgraded with new functionality. Generally the communications link will be required where the module is remote from the means for generating the commands data structure.

The re-configurable resources in the signal processing module preferably include one or more hardware resources such as ASIC's, FPGA's and re-configurable logic. The signal processing module preferably includes digital signal processing (DSP) or any other ISA (Instruction Set Architecture) resources for implementing software based re-configurable resources.

The commands data structure generating means may comprise a number of pre-defined commands data structures which can be provided by the generating means to the signal processing module upon receiving specific requests to implement pre-determined functionality. The generating means may additionally be configured to modify a predetermined commands data structure. The generating means may be located in the module and provide a new commands data structure directly to the dispatcher. Alternatively the generated command data structure may be forwarded to the module, for example over a wireless link or downloaded off the Internet.

The commands data structure generating means may alternatively comprises a scheduler, a compiler, a component library of operations or functions that can be implemented within the signal processing module. Each function or operation will use one or more resources but is defined either by configuration information for a resource or software, and is mapped or associated with a component or module specific operation which defines the configuration requirements for the or each resource required to perform the operation or function. Depending on the resource, its run-time behaviour may also be defined within the component.If appropriate, a hardware profile data structure is also included which defines the actual physical hardware resources available within the signal processing module.

A compiler receives a functional description of a desired functionality and maps this to a set of operations supported by the module. The compiler generates a module specific operations data structure which defines the set of components needed to implement the required functionality. Compilers are well known, and the particular compiler algorithm will depend on the type of functional descriptions to be provided as well as the format of the module specific operations or components data structure that is required.

A scheduler takes this set of mobile specific operations and schedules the operations across the multiple resources available in the module in a time dependent manner which meets the requirements of the functional description as well as providing efficient operation of the resources in order to achieve this. There are many ways of implementing a scheduler known to or implementable by those skilled in the art. Each implementation may give different results and is a tradeoff between complexity and performance. Scheduling problems are usually defined mathematically and heuristic and non-heurestic solution to these problems are available. A scheduler algorithm produces a schedule ( i.e. a sequence of module specific operations implemented by device specific commands) but this sequence can be calculated prior to execution (static scheduler) or during the execution (dynamic scheduler) In addition a scheduler can set parameters such as priority for each task which determine the sequence of operation at run time .

In particular in one aspect the present invention provides a system for reconfiguring a signal processing module having a number of re-configurable resources and comprising: means for providing a data structure corresponding to configuration commands for the resources; a said module comprising means for reconfiguring the terminal using the data structure.

Preferably, the providing means comprises means for communicating said data structure to said module. Preferably, the data structure is communicated as data traffic.

Alternatively, the providing means comprises means for selecting said data structure. The means for selecting said data structure may be at said module, or another part of the system. Preferably, there is further means for communicating instructions for said selection to said module.

Preferably, the data structure is a commands data structure containing configuration commands for the resources. Preferably, the commands data structure comprises run-time commands. Preferably, the commands data structure is a process timetable.

Preferably, the reconfiguring means is a dispatcher

Preferably, the providing means comprises means for generating a module specific commands data structures from a non-module specific data structure.

Preferably, the generating means comprises a scheduler which generates the commands data structure from a module specific operations data structure.

Preferably, the generating means comprises a compiler which generates a module specific operations data structure from a non-module specific functional description data structure. Preferably, the generating means comprises a component library data structure containing predetermined module specific operations implementable on the module.

Preferably, the generating means comprises a hardware profile data structure containing hardware parameters for one or more of said resources. Preferably, the resources comprise one or more re-configurable hardware resources

Preferably, the providing means comprises means for selecting one of a number of one of the following types of predetermined data structures: module specific commands data structure; module specific operations data structures; non-module specific functional description data structure.

Preferably, the system further comprises means for communicating one or more of the operations, description, component or hardware data structures to the module.

Preferably, the module is a wireless terminal or base station. Preferably, each command in the commands data structure is assigned a timestamp.

In particular, another aspect of the present invention provides a system for reconfiguring a signal processing module having a number of re-configurable resources and comprising: wireless communications means for transmitting to said module a data structure corresponding to configuration commands for the resources, such that the module is reconfigured using the data structure.

Preferably, the data structure is a commands data structure comprising configuration commands for the resources. Preferably, the commands data structure comprises run-time commands.

Preferably, the system further comprises a scheduler which generates a commands data structure from a module specific operations data structure.

Preferably, the system further comprises a compiler which generates a module specific operations data structure from a non-module specific functional description data structure.

Preferably, the system further comprises a component library data structure containing predetermined module specific operations implementable on the module.

Preferably, the system further comprises a hardware profile data structure containing hardware parameters for one or more of said resources.

Preferably, the system further comprises means for selecting one of a number of one of the following types of predetermined data structures: module specific commands data structure; module specific operations data structures; non-module specific functional description data structure.

Preferably, the system further comprises a wireless transceiver for transmitting a said data structure. Preferably, the data structure is transmitted as data traffic.
In general terms in another aspect the present invention provides a re-configurable signal processing module having a number of re-configurable resources and comprising means for receiving a data structure comprising configuration commands for the resources, and means for reconfiguring the module using this data structure. The data structure will typically be a process timetable data structure containing configuration and run-time commands. The receiving means preferably comprises a wireless transceiver.

Typically the reconfiguring means is a dispatcher which processes the timetable data structure to send configuration messages or commands to the re-configurable resources.

In particular in a second aspect of the present invention there is provided a signal processing module having a number of re-configurable resources and comprising: wireless communications means for receiving a data structure corresponding to configuration commands for the resources; means for reconfiguring the module using the data structure.

Preferably, the data structure is a commands data structure comprising configuration commands for the resources. Preferably, the commands data structure comprises run-time commands. Preferably, the commands data structure is a process timetable.

Preferably, the reconfiguring means comprises a dispatcher.

Preferably, the module further comprises a scheduler which generates the commands data structure from a module specific operations data structure.

Preferably, the module further comprises a compiler which generates a module specific operations data structure from a non-module specific functional description data structure.

Preferably, the module further comprises a component library data structure containing predetermined module specific operations implementable on the module.

Preferably, the resources comprise one or more re-configurable hardware resources.

Preferably, the module further comprises a hardware profile data structure containing hardware parameters for one or more of said resources.

Preferably, the module further comprises means for selecting one of a number of one of the following types of predetermined data structures: module specific commands data structure; module specific operations data structures; non-module specific functional description data structure.

Preferably, the module is a wireless terminal or base station. Preferably, the module further comprises a wireless transceiver for receiving a said data structure. Preferably, the data structure is received as data traffic.

Preferably, each command in the commands data structure is assigned a timestamp.

In general terms in another aspect the present invention provides a system for reconfiguring a signal processing module having a number of reconfigurable resources. The system comprises means for compiling a functional description of the required functionality for the module, for example a logical functional description (LFD) of a reconfigured terminal. The system also comprises a library of available functions within the signal processing module, and which is used by the compiler to generate from the functional description a data structure defining a set of module specific operations for the module to implement in order to provide the required functionality.

The system further comprises a scheduler coupled to the compiler and arranged to convert the module specific operations data structure into a commands data structure comprising resource specific configuration commands for the resources. The commands data structure preferably also comprises resource specific real-time operation commands for the resources. The system further comprises means for reconfiguring the signal processing module using the commands data structure. The commands data structure is preferably a process timetable, and the re-configurable means is preferably a dispatcher.

These various parts of the system may be distributed in any fashion across components of the system, for example a network and the terminal in a communications system. The terminal may be coupled to the network by a wireless link, or directly via cabling such as a USB link, or higher level communications such as over the Internet for example.

The module specific operations data structure is preferably a directed acyclic graph (DAG). Preferably the re-configurable resources comprise one or more hardware resources such as ASIC's and FPGA's. Preferably the system further comprises a hardware profile data structure corresponding to said hardware resources.

Preferably time stamps are assigned to the commands in the commands data structure in order to determine when the commands are executed. This will typically be implemented in a scheduler.

The functional description for a re-configurable wireless terminal can be provided by a user request from the signal processing module for additional functionality, such as SMS messaging; or by the network to upgrade the signal processing module or to improve network performance. Typically a control means in the network generates an LFD based on these requests. Another important reason for re-configuration is adaptation in which the terminal and/or base-station adapts its configuration based on measured metrics such as channel conditions to ensure the most optimum use of the available resources.

In particular in this aspect the present invention provides a system for reconfiguring a module having a number of re-configurable resources and comprising: means for compiling a required non-module specific functional description of the reconfigured module using a component library of available module specific operations in order to generate a module specific operations data structure defining a set of operations for the module to implement in order to provide the reconfigured module; a scheduler coupled to the compiler and arranged to convert the operations data structure into a commands data structure comprising configuration commands for the resources; and means at the module for reconfiguring the module using the commands data structure.

In particular, in another aspect there is provided a re-configurable wireless terminal having a number of re-configurable resources and comprising: means for receiving a commands data structure comprising configuration commands for the resources; means at the terminal for reconfiguring the terminal using the data structure.

Preferably, the terminal receives the data structure wirelessly.

Preferably, the resources comprise a re-configurable hardware resource.
In general terms, in another aspect the present invention provides a method of configuring a signal processing module having a number of reconfigurable resources. The method comprises providing a functional description data structure for the module to be reconfigured, providing a library data structure of available module specific functions or operations within the module, each module specific function or operation defining how to implement an operation on one or more resources, compiling the functional description data structure using the library data structure in order to generate a module specific operations data structure defining a set of module specific operations for implementing the required functional description. The module specific operations data structure defines the dependency between the operations and the components that can be used to implement the operations, as well as resource specific configuration requirements to allow this to happen. The method further comprises generating a set of resource specific configuration commands for the resources in order to implement the module specific operations, and dispatching the commands to their respective resources at the correct time.

In particular, in this aspect the present invention provides a method of reconfiguring a terminal having a number of resources, comprising: providing a functional description data structure for the terminal to be reconfigured; providing a component library data structure of available components within the terminal, each component implementing an operation on one or more resources; compiling the functional description data structure using the resource library data structure in order to generate an operations data structure defining a series of operations corresponding to the functional description and the dependency between the operations and the components that can be used to implement the operations; generating a set of configuration commands for the resources in order to implement the operations; dispatching the commands to the respective resources.

In particular, in another aspect there is provided a method of reconfiguring a terminal have a number of re-configurable resources, comprising: providing a data structure data structure corresponding to configuration commands for the resources; reconfiguring the terminal using the data structure.

Preferably, the data structure is a commands data structure comprising configuration commands for the resources. Preferably, the commands data structure comprises run-time commands. Preferably, the commands data structure is a process timetable.

Preferably, said providing comprises generating a module specific commands data structures from a non-module specific data structure.

Preferably, said generating comprises scheduling a module specific operations data structure to generate a commands data structure.

Preferably, said generating comprises compiling a non-module specific functional description data structure to generate a module specific operations data structure.

Preferably, said generating comprises a component library data structure containing predetermined module specific operations implementable on the module.

Preferably, said generating comprises a hardware profile data structure containing hardware parameters for one or more of said resources.

Preferably, said providing comprises selecting one of a number of one of the following types of predetermined data structures: module specific commands data structure; module specific operations data structures; non-module specific functional description data structure.

Preferably, the method further comprises communicating one or more of the commands data structures to the module. Preferably, the method further comprises communicating one or more of the operations, description, component or hardware data structures to the module. Preferably, said communication is wireless. Preferably, the data structure is communicated as data traffic. Preferably, each command in the commands data structure is assigned a timestamp.

In particular, in another aspect there is provided a method of reconfiguring a signal processing module having a number of re-configurable resources and comprising:
wirelessly receiving a data structure corresponding to configuration commands for the resources;
reconfiguring the module using the data structure.

Preferably, the data structure is a commands data structure comprising configuration commands for the resources. Preferably, the commands data structure comprises run-time commands.

Preferably, the method further comprises generating a commands data structure.

Alternatively, the method further comprises selecting a commands data structure.

Preferably, the module is a wireless terminal or base station. Preferably, the data structure is received as data traffic.

In particular, in a further aspect there is provided a method for reconfiguring a signal processing module having a number of re-configurable resources and comprising: wirelessly transmitting to said module a data structure corresponding to configuration commands for the resources, such that the module is reconfigured using the data structure.

Preferably, the data structure is a commands data structure comprising configuration commands for the resources.

Preferably, the method further comprises scheduling a module specific operations data structure to generates a commands data structure.

Preferably, the method further comprises compiling a non-module specific functional description data structure to generates a module specific operations data structure.

Preferably, the method further comprises providing a component library data structure containing predetermined module specific operations implementable on the module.

Preferably, the method further comprises selecting one of a number of one of the following types of predetermined data structures: module specific commands data structure; module specific operations data structures; non-module specific functional description data structure.

The above described methods and apparatus may be implemented in software, for example as a carrier medium carrying processor readable code for controlling a processor to carry out the above methods or implement the above apparatus.

There is also provided a functional description data structure for a signal processing module having reconfigurable resources, the data structure comprising a set of generic operations required to provide a desired functionality in the module.

There is also provided a module specific operations (or components) library data structure for a signal processing module having reconfigurable resources, the data structure comprising the set of module specific operations which can be implemented on the module.

There is also provided a module specific operations data structure (also described as a components data structure) for a signal processing module having reconfigurable resources, the data structure comprising a set of module specific operations corresponding to the generic operations of the functional description data structure.

There is also provided a compiler arranged to produce a module specific operations data structure from a functional description data structure and a module specific operations library data structure.

There is also provided a module specific hardware profile data structure for a signal processing module having reconfigurable resources including one or more physical resources, the data structure comprising a set of the physical resources available within the module, preferably with their associated performance.

There is also provided a module specific commands data structure for a signal processing module having reconfigurable resources, the data structure comprising a set of module specific resource configuration commands. Preferably the data structure also comprises run-time resource execution commands.

There is also provided a scheduler arranged to produce a module specific commands data structure from a module specific operations data structure and a module specific operations library data structure. The scheduler also utilises a module specific hardware profile data structure for modules with reconfigurable physical resources.

In another aspect there is also provided a communications signal comprising one or more of the above defined data structures.

The data structures may be distributed about a system comprising a signal processing module having reconfigurable resources in any convenient manner. For example some data structures may be located on a network side of the system, and the rest of the data structures on the module or a third party location.

Embodiments will now be described with reference to the following drawings by way of example only and without intending to be limiting, in which;
Figure 1 is a signalling arrangement for modifying the functionality of a wireless terminal;
Figure 2 is a schematic of a wireless terminal comprising a number of reconfigurable resources;
Figure 3 is a schematic of a system according to an embodiment for reconfiguring the terminal of Figure 2;
Figure 4a and 4b show functional descriptions for a reconfigured terminal;
Figure 5 shows a directed acyclic graph for two tasks;
Figure 6 is a schematic showing the operation of a system according to an embodiment;
Figure 7 shows how operations are scheduled across five resources;
Figure 8 shows the architecture of a system according to an embodiment;
Figure 9 is a flow chart of the operations performed by a wireless terminal and the network part of a system according to an embodiment; and
Figure 10 shows the architecture of a terminal according to an embodiment.

A signalling system for modifying the functionality of a wireless terminal is shown in Figure 1. On the network or base station side of the wireless system a call or mobile controller 1 sets up a call with the mobile terminal and instructs the terminal to set a number of predetermined variables such as the vocoder rate for example. This is achieved by sending control packets 9 between the base station and the terminal typically - at the MAC layer across the wireless link 3. In the example shown, one bit 10 of a control packet 9 is used to indicate half or full rate vocoder setting. The control packets 9 are sent by a transceiver 2 at the base station and received by a transceiver 4 at the terminal. The control packet signals are relayed to a configuration parameters table 5 within the terminal, which stores one of a number of variables relating to variations in functionality for the terminal. The functionality of the terminal is predetermined by the limited number of configuration parameters 5 that can be changed by the signalling, and by the size and complexity of the hard code 6 required to implement the corresponding "options". However this does permit some variation in functionality such as changes to the vocoder rate.

The terminal comprises operating code 6 which is implemented by a processing platform 7 such as a DSP chip. The code 6 is hard coded but can query the configuration table 5 in order to adjust which operations are implemented. The terminal may also comprise additional resources (7) such as ASIC's to perform specific operations such as Turbo decoding.

Typically the resources 7 are limited in their ability to reconfigure themselves due to the limited range of functionality envisioned at design time of the terminal. For example the terminal may contain a number of ASIC's to perform a number of set tasks. In order to accommodate different wireless protocols or other functionality changes, these types of terminals will typically include additional ASIC's to deal with the different air interface protocol signal processing or other functionality requirments. This type of architecture therefore limits the terminal's ability to be reconfigured and additionally requires the terminal to have additional hardware to support alternative and/or additional functions, and which is redundant for a large proportion of the terminal's operational time.

As described above, some known system architectures provide for higher layer signalling to allow for greater flexibility in the functionality of the terminal, however the variety of functionality is still limited and must be anticipated at design time of the terminal in order to provide the appropriate or the required signalling.

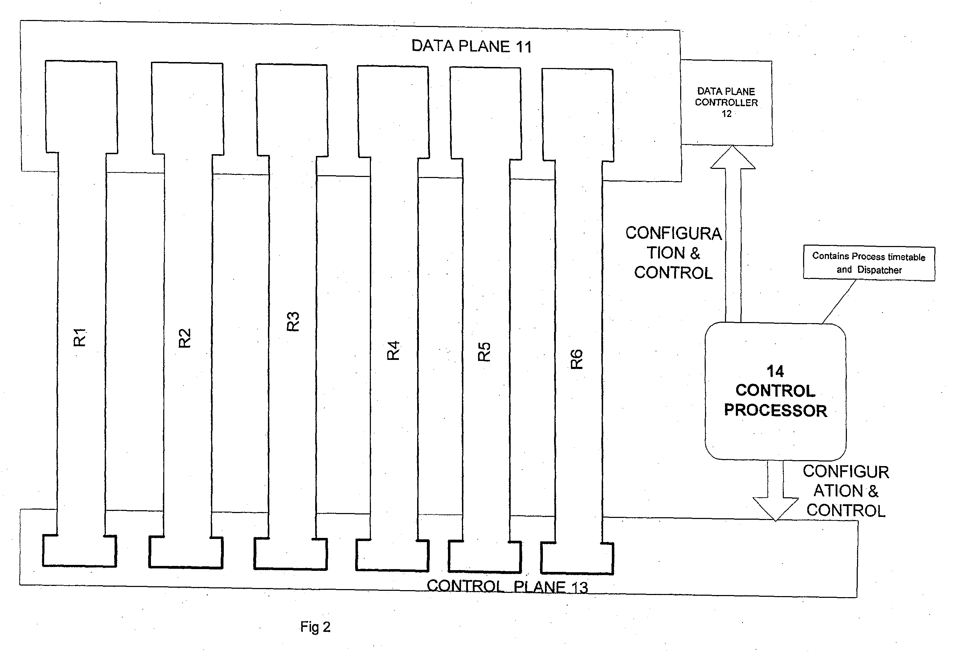

Figure 2 shows the architecture of a reconfigurable terminal comprising a number of resources R1 - R6, at least some of which are reconfigurable. The resources include hardware resources such as ASIC's, FPGA's and memory, as well as software blocks of code implementable on a processing platform such as a DSP resource. The terminal is implemented using data and control planes 11 and 13 respectively, to transfer respectively data between the various resources R and control commands from a control processor 14 to the various resources R. The control plane and data plane may be two separate physical entities, however it is also possible to implement them on a single shared communication plane with some form of logical partitioning.

The control processor 14 reads the active process timetable and includes a dispatcher to dispatch the commands in the timetable to the appropriate resources at the appropriate time. The commands dispatched to the resources R will include both configuration commands as well as run time commands to process data on the data plane 11. A data plane controller 12 ensures correct transfer of data between resources, and may be configured to allow communications between resources R1 - R6 operating at different voltage and frequency levels.

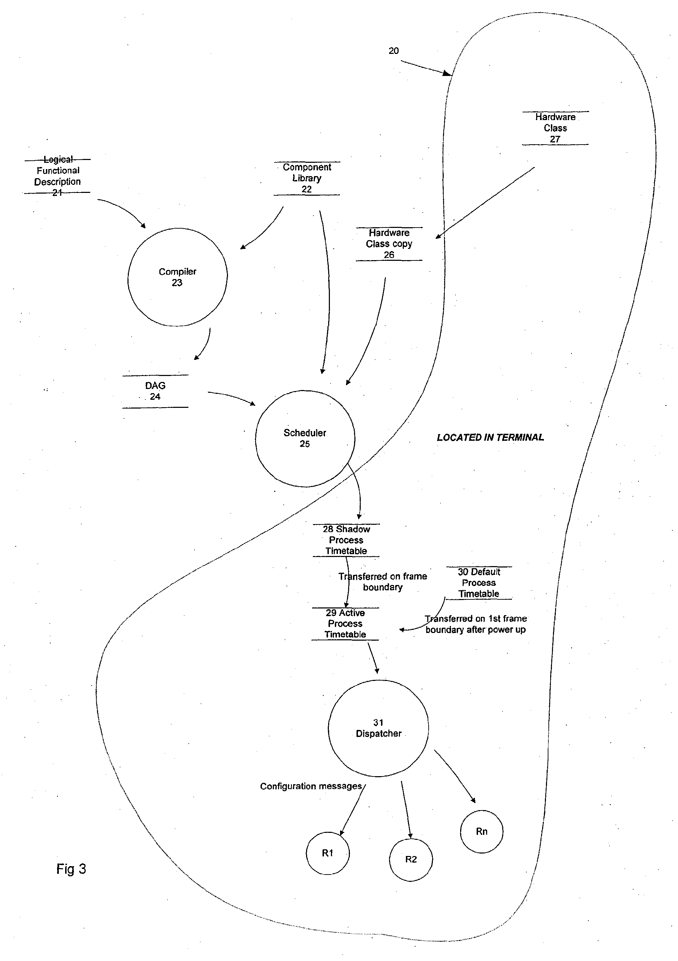

Figure 3 shows a system for reconfiguring re-configurable signal processing modules according to an embodiment. The system can be distributed between a terminal 20 and another entity such as a network which might be associated with a wireless base station for example, or a server connected to the Internet. Alternatively the system may be implemented at a single location, for example on a wireless card connected to or associated with a mobile computer or other processing apparatus.

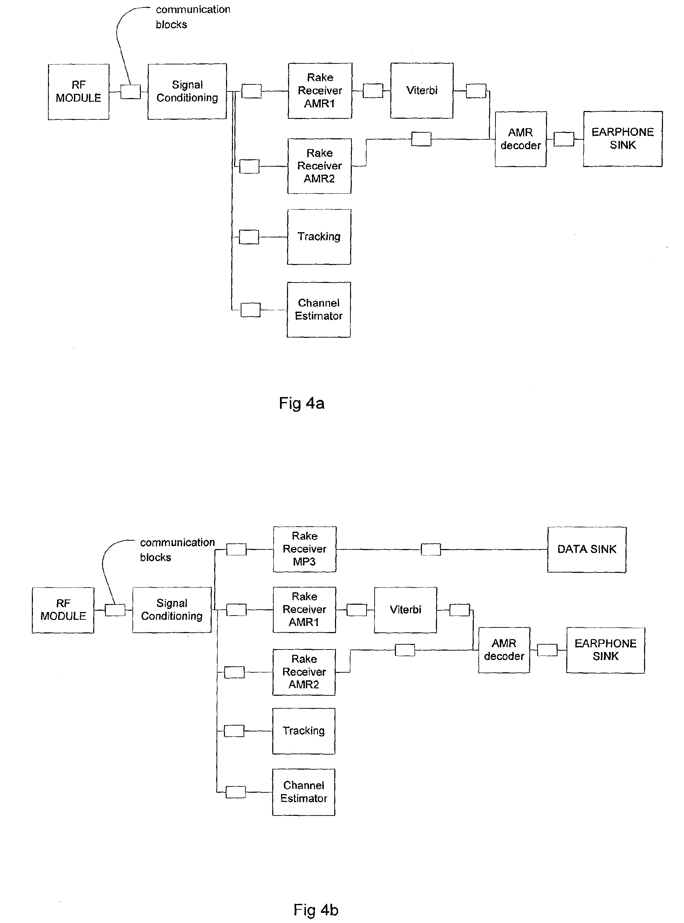

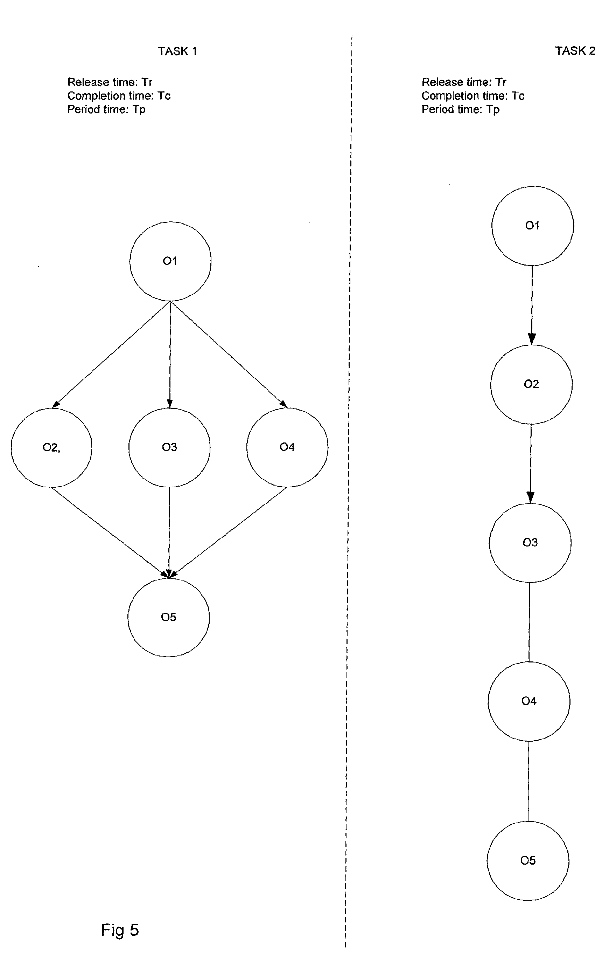

Referring also to figures 4a-8, the desired configuration of the terminal is typically defined by a data structure called the logical functional description (LFD) 21. This defines the operations or tasks required to provide a desired functionality. Tasks such as channel estimation are made up of operations and can be represented by directed acylic graphs (DAG's) as shown in figure 5.

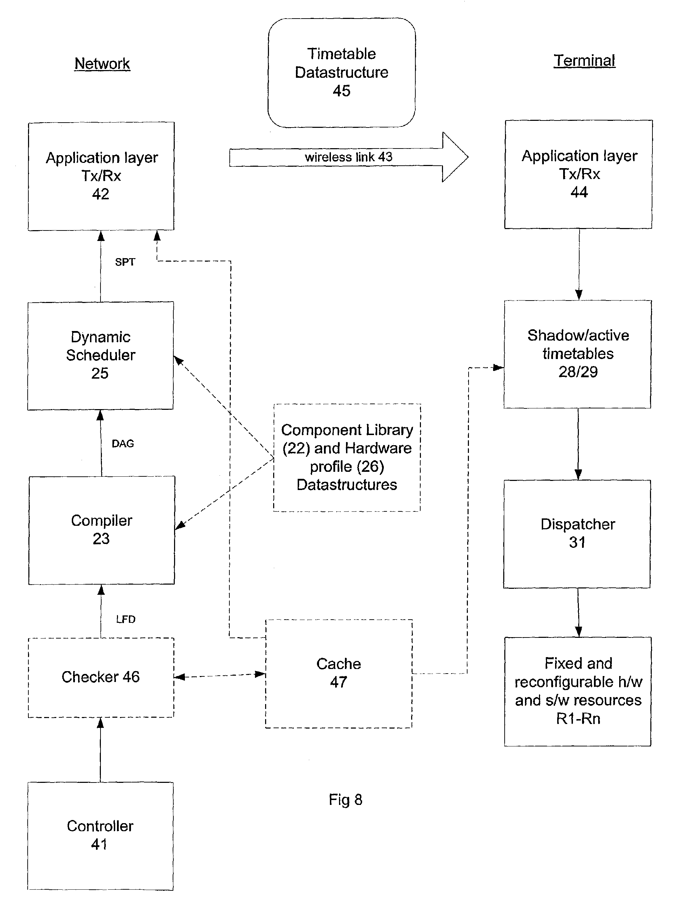

Figures 4a and 4b show examples of LFDs. Figure 4a shows a mobile phone configured to implement WCDMA voicecall using an adaptive multirate vocoder (AMR). If a user of the mobile phone (terminal) then decides to download a music track whilst still making the call, a high level entity within the system (the controller 41 of Figure 8) adds the extra modules to the LFD and presents this for compiling. The modified LFD is shown in Figure 4b.

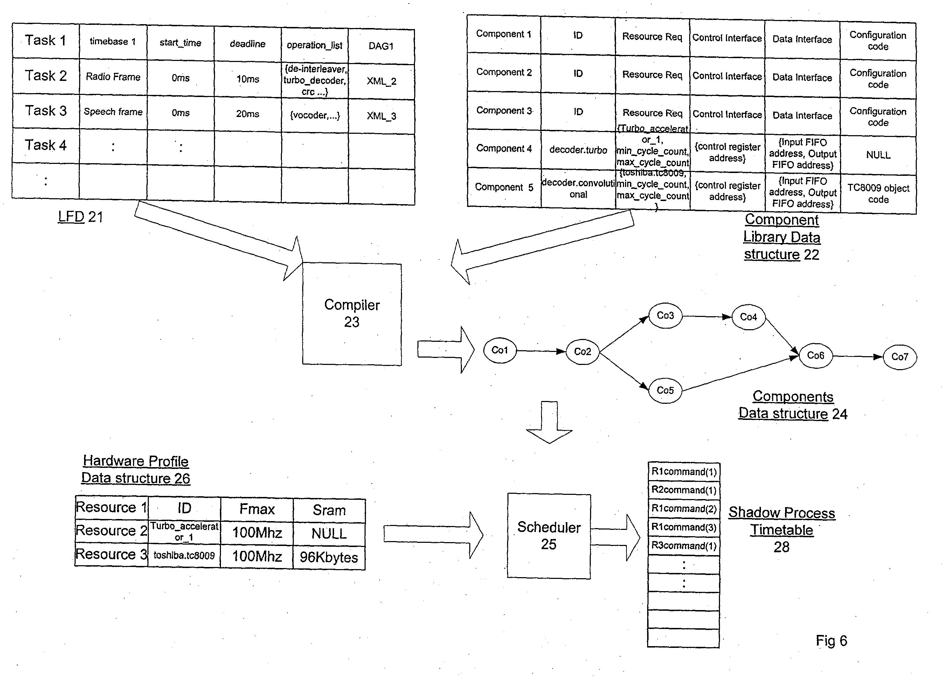

The system itself comprises a component library 22 of available functionality in the terminal. The component library is a set of functions (or operations) which can be implemented on the resources available. A component can be downloaded on request but is only downloaded if the terminal has the required resources. If the component is no longer used and the memory it is stored in is required the component could be deleted. Figure 6 gives example details of what could be defined by a library component. The component may also be defined in a more abstract fashion using an object orientated language such as UML for example.

A component implements an operation on one or more resources, and is defined by the component library data structure. Each terminal type requires its own component library as each terminal type will have varying resources and therefore may or may not support certain operations and may support operations using different resources, and hence different components. Each component therefore is a pre-determined and terminal specific way of implementing an operation using the specific terminal resources. Example component library fields include:
- Executable or binary, this can include a programme for an instruction set architecture (ISA) processor or configuration information for reconfigurable logic.
- Hardware requirements including metrics for execution time and power consumption. Because many of the operations may operate differently depending on the data being processed the metrics are given in terms of worst case, mean and standard deviation executable steps.
- Supported operations for example channel decoder, turbo decoder, WCDMA.
- Definition of controller interface
- Definition of data interface
- Reference to other components if this component is hierarchical.

A compiler 23 compiles the functional description (LFD) 21 of the desired functionality of the terminal 20 into a terminal specific operations or components data structure 24 defining a set of components for the terminal to implement in order to provide the required functionality (i.e. the set of operations required to implement this). The LFD is broken down into a set of tasks, for example "Rake Receiver MP3" , each task being defined by a set of operations and a set of timing and quality constraints. An operation can include data processing but also data communications for example data bus control, or data storage in a memory resource.

The compiler 23 uses a description of the terminal's required functionality (LFD 21) and a description of the components available in the terminal (the component library 22) to map required operations defined in the LFD 21 to actual operations supported by the available components (component 1 - component n in figure 6). If more than one component can be used to implement an operation then preferably references to both will be included in the output operations data structure 24. An example of this would be when the LFD requests a channel decoder (turbo decoder, polynomial 1, polynomial 2.....) and the component library has a hardware and software turbo decoder. By supplying a reference to both instances the system can allow the scheduler 25 to further optimise the design. If the compiler 23 is unable to find components to implement the requested operation it will report back to the controlling entity (for example controller 41 in figure 8) that it failed and list the operations that could not be implemented. The control entity may then download the missing components if the terminal has the correct resources (as defined in the hardware class described below) to implement the new component

A component can be hierarchical, in other words made up of lower level operations in which case the compiler will add all these operations to the output or operations data structure.

The components data structure 24 defines the terminal specific components required to implement the operations required by the LFD. The components data structure 24 can be described in the form of a directed acyclic graph (DAG) as shown in Figure 6.

The resources R in the terminal preferably include hardware, for example hardware accelerators such as a turbo decoder ASIC, memory such as DRAM, a processor, a data network, and FPGA's or reconfigurable logic. It is envisaged that the data network resource could be implemented in many ways, but its purpose is to allow data to be transferred from one resource to the next. When a data network is a simple set of wires (a data bus) connecting each resource, the scheduler 25 must programme the bus arbiter to assign priority to each resource. In a more sophisticated data network the scheduler might be able to define maximum latency, bandwidths, operating voltage and frequency.

A scheduler 25 interprets the DAG 24 and generates a set of configuration commands specific to the resources in the terminal, as well as a set of real time operating commands, for example start, stop and reset. Associated with each command is a time stamp indicating when the message is to be sent to the resource. The commands are then stored in a data structure called the shadow process timetable 28. If the scheduler determines that the generic operations in the DAG 24 cannot be carried out in the particular terminal (because of limited resources for example), then this is indicated to the entity controlling the system.

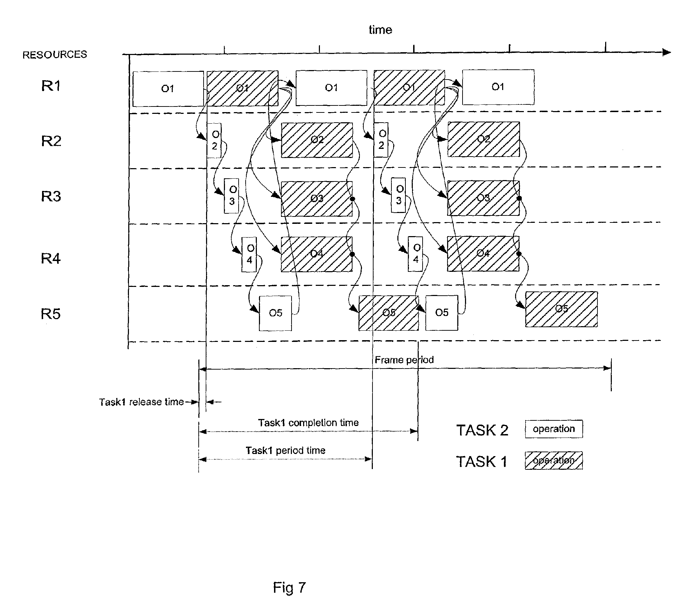

Referring to Figure 5, two tasks are shown in DAG format, each comprising five operations 01-05 but implemented in different ways and with different completion times. The scheduler 25 receives the required operations in the form of the components data structure 24 which provides the required terminal specific operations, and how these need to be implemented. As is known a scheduler will schedule the numerous required operations across the multiple resources according to known scheduling algorithms and depending on the resource requirements of the operations and when they need to be performed relative to each other. The start of one operation may or may not be dependent on the completion of a prior operation. This is illustrated schematically in figure 7. The scheduler 25 then generates terminal specific control commands using the components library 22 and, if appropriate, the hardware profile (network copy 26) 26 in order to implement these operations according to the timetable shown in Figure 6.

The scheduler 25 again uses the component library 22 to generate the shadow process timetable 28. Whilst the terminal 20 can be implemented using software only resources, preferably the terminal comprises one or more hardware resources such as ASIC's and/or FPGA's. In general it is possible to design a 'hardware' solution to be more power efficient than a 'software' solution because a processor based solution has a limited number of parallel operations when compared to a pure hardware solution and therefore has to use a higher clock and hence higher voltage and so has a higher power consumption. In this case the system also comprises a hardware profile 27. The hardware profile is a data structure that defines the hardware resources available in the terminal 20. In the embodiment shown in Figure 3, a copy of the hardware profile 26 is available on the network side of the system for the scheduler 25. The hardware profile (also known as hardware class and hardware library is a list of physical resources in the terminal and their associated performance e.g. maximum clock frequency. An example structure is shown in figure 6.

A single terminal or base station may have more than one set of independent resources and hence multiple schedulers and associated process timetables. Alternatively or additionally, if two systems are supported (i.e. a GSM and CDMA multi-mode terminal ) it maybe advantageous to use more than one set of process timetables. Each timetable would then be driven of a separate timebase.

A shadow 28 and active 29 process timetable system is used to ensure that the timetable is valid at any particular time. It allows the configuration to be changed without the entity (eg scheduler) responsible for modifying the configuration having strict timing constraints to update the active timetable i.e. it can take a whole multiframe to update the shadow timetable The shadow process timetable 28 is transferred into the active process timetable 29 at regular intervals, for example in a GSM system this could be on the multi-frame boundary.

A dispatcher 31 reads the active process timetable 29 at regular intervals, or when it is informed a change has occurred. It will then read all items in the timetable and determine from a time stamp when the next message should be sent to a resource R. This message is then prepared so that it can be sent at the precise time, and a timer is set to generate an interrupt that will initiate the transmission of the message. Alternatively the dispatcher may send all messages which are pending in the next N tick period. The tick period is repetitive event (usually an interrupt) from which the code in a processor executes a set of functions, and is well known in the art. This transfer is allowed to take up to 1 tick period. The appropriate resource R will then implement the command in the message, on the tick boundary, (N -1) tick period.

A configuration command can contain executable information (for example machine code for processors or binary code for FPGA's) or control words to configure parameters and logic. By assigning time stamps to each command, the scheduler specifies when an operation is implemented on a resource. This minimises the contention between shared resources, which in turn reduces the amount of resources required or maximises the functionality of the terminal. In addition as operation times become more deterministic, because of reduced resource contention, the operating frequency and hence power consumption of the terminal can be minimised.

When a terminal is configured to use multiple time bases such as dual mode phones running GSM and UMTS, the precise timing may not be possible using the scheduler's time base, therefore commands may also contain a time stamp using the time base local to that resource. This time stamp will then be read by the resource and used to synchronise the execution of the command.

Reductions in supply voltage and/or operating frequency for each resource can be implemented in the configuration control messages sent to that resource by the dispatcher 31. This provides an easy method for reducing power consumption of battery sourced devices such as mobile phones when less functionality is required.

The terminal 20 may also include a default process timetable 30 which becomes the active process timetable 29 on start-up if no shadow process timetable is available for configuring the terminal.

In an alternative arrangement, this can be extended to include any number of predefined process timetables which correspond to already known and commonly used configurations. Each of these configurations could have been tested by the manufacturer. This reduces complexity by not requiring a compiler and scheduler. As a further alternative, numerous pre-defined process timetables may be stored at the network, and the one corresponding to a received LFD sent over to the wireless link to the terminal.

In this arrangement each timetable is associated with a specific LFD, each LFD having a unique ID. Alternatively if an LFD is likely to be reused, rather than recalculating the timetable it could be cached with a unique ID for the LFD and then when the new LFD is presented the cache would be searched before the timetable is calculated.

The various parts of the system can be distributed between the terminal and another location, for example a wireless network or a processing platform such as a portable computer. The remote location may also correspond to a resource on the Internet which allows a shadow process timetable to be downloaded to the terminal 20. If the various data structures are located in separate locations to the scheduler or compiler, extra communication protocols are implemented to allow these components to query the LFD, DAG, component library and hardware profile data structures. In addition if the scheduler 25 is located remotely it is arranged to be able to download the process timetable on the terminal.

Three possible distributed architectures comprise:
1. Compiler, scheduler, LFD and component library located in the terminal. External entities are then able to modify the LFD and the component library and then inform the scheduler so that it can recalculate the resource timetable. This configuration allows the terminal to modify its functional configuration quickly as it does not have to communicate externally.
2. Compiler scheduler LFD and component library located remotely. This configuration reduces the communication over head, as well as the processing and power consumption requirements of the terminal.
3. Scheduler located remotely, compiler, LFD and component library located on terminal. A complicated system may require the scheduler to be computationally intense, for example based on a heuristic algorithm, and so a remote location avoids interfering with the real time operation of the terminal.

The flexible architecture of the system has a number of advantages including providing highly flexible functionality in the terminal, whilst being able to minimise the processing required for reconfiguration within the terminal. This highly flexible approach allows inter alia new software modules to be downloaded to the terminal as additional resources to provide functionality that was not anticipated at design time. These additional software resources can be easily implemented by the terminal using an updated process timetable for example. The software modules themselves may be downloaded over a wireless communication link or via cabling to an Internet modem for example. Thus the terminal is easily upgraded

Because each manufacturer's platform or terminal is likely to be different (have different hardware and software modules) the process timetables for each terminal will be different. However, this is easily accommodated in the embodiment which processes a generic LFD into a terminal specific process timetable. The network operator can then provide the functionality description, and the system then performs the required scheduling processing and downloading appropriate process timetables to the respective terminals. By appropriately distributing the system, the requirements on the terminal may be minimised by implementing only the time dependent parts of the system on the terminal, that is the dispatcher and process timetables. This makes the terminal highly efficient because the scheduler and compiler have been taken out.

The highly flexible nature of the embodiment allows for example a mobile phone to be turned from a GSM terminal into a CDMA terminal or a 3G terminal into a WLAN terminal for example.

Referring now to Figure 6, a more detailed schematic of a system for reconfiguring a terminal is shown. The LFD 21 is defined by a data structure comprising a number of tasks associated with timing parameters, each task being also associated with generic operations OPₓ .....OPy. The component library 22 is defined by a data structure comprising a number of components. Each component defines how one or more operations may be implemented on one or more resources, including where appropriate hardware requirements, software module requirements and other data specific to the resources available on the terminal.

The compiler 23 takes these two data structures (LFD21 and component library 22) and generates a components data structure (DAG 24) defining a number of relationships in time between a series of operations OP1-OP7 (tasks). The scheduler 25 takes this components or operations data structure and converts it into a shadow process timetable 28 comprising a series of resource specific commands, including configuration and run time commands, in order to implement the required operations to provide the desired functionality of the terminal.

Figure 8 shows a schematic of the architecture of a wireless communications system having a terminal and network infrastructure coupled together by a wireless link. The network includes a controller 41 which receives requests to reconfigure the terminal. This request may be initiated by the user of the terminal, or alternatively by the network, for example when the terminal enters a region requiring a modified air interface protocol. Similarly the controller 41 may be instructed by a higher entity such as the network operator to implement additional functionality on the terminal, either to improve network operation or for example because the user of the terminal has requested and paid for this additional functionality.

The controller 41 generates an appropriate LFD which is compiled by a compiler 23 into a DAG using configuration data structures such as a component library 22 and if appropriate a hardware profile 26. A dynamic scheduler 25 generates a shadow process timetable from the DAG and sends this to the terminal via an application layer interface mechanism 42 and 44. The process timetable data structure 45 is transferred as data over the wireless link 43 to the terminal which stores this as its shadow process timetable 28. At the appropriate time, the active process timetable 29 is replaced by this new shadow process timetable, and the dispatcher 31 instructs the various re-configurable resources R1-Rn to carry out the new functionality. The terminal may additionally be provided with hardware and software components to enable its re-configurable software modules R1-Rn to be added to or modified, for example by downloading a new resource Rn+1 which is a block of code to carry out specific functionality. The controller 41 then enables the terminal to implement this additional resource by generating a modified LFD, which in turn is implemented on the terminal as a new active process timetable including commands to the new resource Rn+1.

In an alternative architecture, a checker 46 of LFD's is provided as part of the system. In this way the system first checks the LFD supplied by the controller 41 to determine whether this corresponds to a pre-defined process timetable stored by the system. Predefined process timetables are stored in a cache 47 which may be located either on the network or terminal sides of the system (or distributed). If the LDF coming into the checker 46 corresponds to a process timetable or commands data structure in the cache 47, then two operations may follow depending on where the cache 47 is located. If the cache 47 is located on the network side, the process timetable is forwarded to the networks transceiver 42 and passed onto the terminal via data structure 45. If the cache 45 is on the terminal, then a signal ID is sent to the terminal which retrieves the identified process timetable from the local cache.

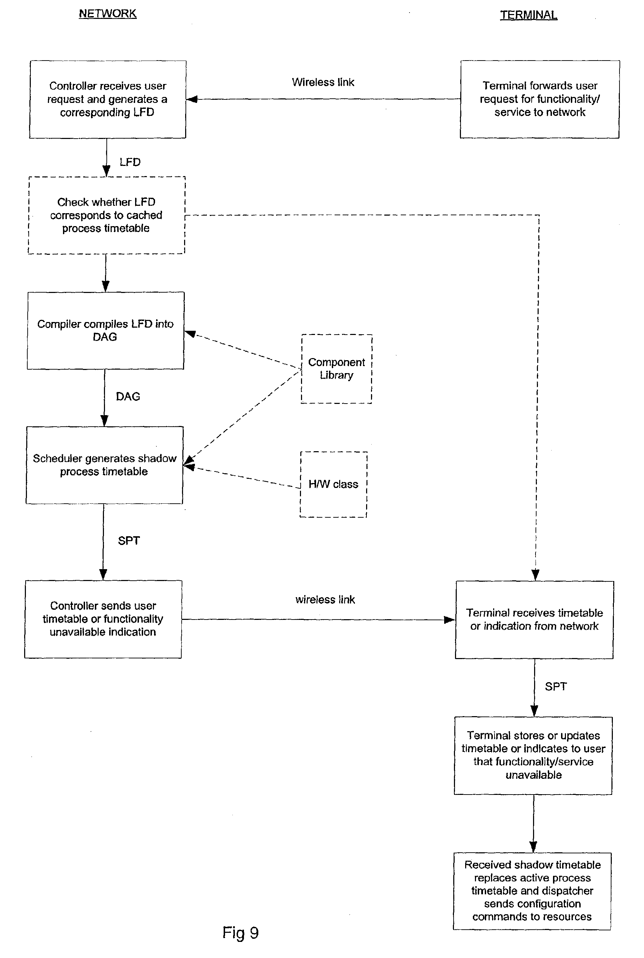

Figure 9 shows the steps involved in implementing these operations. This may include an indication from the network that the requested functionality is unavailable given the resources on the particular terminal.

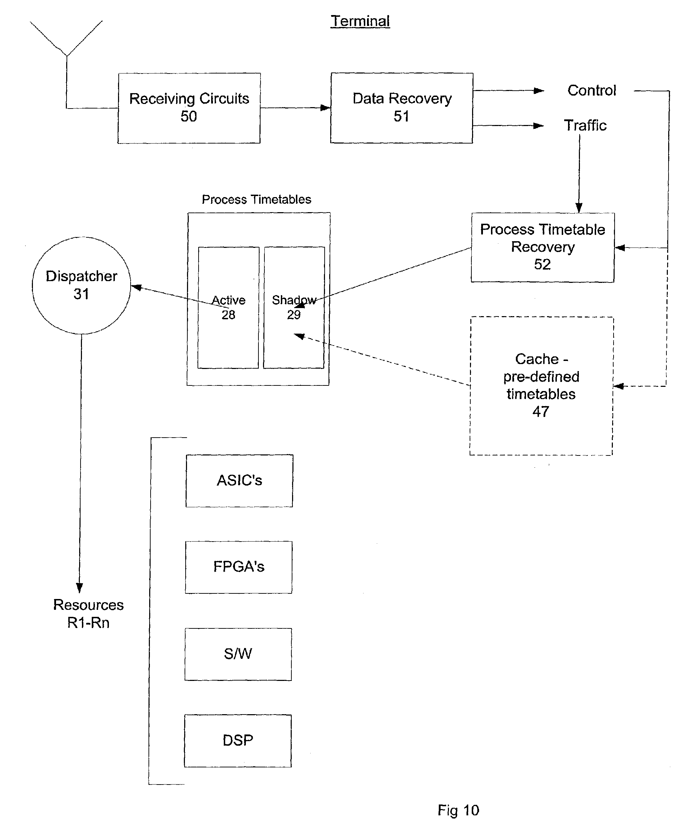

Referring to Figure 10, a terminal architecture is shown in more detail. The terminal comprises receiving circuits 50 which will be well known in the art and will be implemented by the various resources R within the terminal. The shadow process timetable is received using a data recovery unit 51 which receives the data over a traffic channel. The timetable data structure may be compressed or in other ways modified to enable efficient wireless communication, for example encoded as an XML document, and the reconstituted shadow process timetable is recovered using an appropriate processing block 52 which receives the data and appropriate control signals. The recovered process timetable is stored on the terminal as its shadow process timetable, and becomes the active process timetable in due course.

In the arrangement using pre-defined timetables cached on the terminal, a control signal is received by the terminal and the corresponding timetable is provided as shown in figure 10. Other data structures such as the LFD 21, or components data structure may be sent across the wireless link depending on how the system is distributed.

The re-configurable terminal or more generally signal processing module system has been described mostly with respect to a wireless link between the terminal and other parts of the system. This is not necessary and the system may be distributed in other ways for example via USB or other cable links, via a network interface such as the Internet, or via a simple electrical connector between a laptop computer and a wireless card (terminal) within or connected to that computer. Equally the system may be implemented on a co-located basis for example within a single computer.

Furthermore whilst the re-configurable signal processing module has been largely described with respect to a mobile wireless terminal, other applications are contemplated for example wireless base stations. In such a scenario the base station receives the process timetable directly from the network and reconfigures the baseband processing functions. This would be used in scenarios where both the base station and terminal are being configured to optimise channel conditions e.g. to change modulation schemes.

The skilled person will recognise that the above-described apparatus and methods may be embodied as processor control code, for example on a carrier medium such as a disk, CD- or DVD-ROM, programmed memory such as read only memory (Firmware), or on a data carrier such as an optical or electrical signal carrier. For many applications embodiments of the invention will be implemented on a DSP (Digital Signal Processor), ASIC (Application Specific Integrated Circuit) or FPGA (Field Programmable Gate Array). Thus the code may comprise conventional programme code or microcode or, for example code for setting up or controlling an ASIC or FPGA. The code may also comprise code for dynamically configuring re-configurable apparatus such as reprogrammable logic gate arrays. Similarly the code may comprise code for a hardware description language such as Verilog ™ or VHDL (Very high speed integrated circuit Hardware Description Language). As the skilled person will appreciate, the code may be distributed between a plurality of coupled components in communication with one another. Where appropriate, the embodiments may also be implemented using code running on a field-(re)programmable analog array or similar device in order to configure analog hardware.

The skilled person will also appreciate that the various embodiments and specific features described with respect to them could be freely combined with the other embodiments or their specifically described features in general accordance with the above teaching. The skilled person will also recognise that various alterations and modifications can be made to specific examples described without departing from the scope of the appended claims.

## Claims

1. A system for reconfiguring a signal processing module having a number of re-configurable resources and comprising:
means for providing a data structure corresponding to configuration commands for the resources;
a said module which comprises means for reconfiguring the terminal using the data structure.

2. A system according to claim 1 wherein the providing means comprises means for communicating said data structure to said module.

3. A system according to claim 2 wherein the data structure is communicated as data traffic.

4. A system according to claim 2 or 3 wherein the providing means comprises means for selecting said data structure.

5. A system according to claim 3 wherein the means for selecting said data structure is at said module.

6. A system according to claim 5 further comprising means for communicating said selection to said module.

7. A system according to claim 3 or 6 wherein said communication is wireless.

8. A system according to any one preceding claim wherein the data structure is a commands data structure containing configuration commands for the resources

9. A system according to claim 8 wherein the commands data structure comprises run-time commands.

10. A system according to claim 1 or 9 wherein the commands data structure is a process timetable.

11. A system according to any one preceding claim wherein the reconfiguring means is a dispatcher

12. A system according to any one preceding claim wherein the providing means comprises means for generating a module specific commands data structures from a non-module specific data structure.

13. A system according to claim 12 wherein the generating means comprises a scheduler which generates the commands data structure from a module specific operations data structure.

14. A system according to claim 12 or 13 wherein the generating means comprises a compiler which generates a module specific operations data structure from a non-module specific functional description data structure.

15. A system according to claim 12, 13 or 14 wherein the generating means comprises a component library data structure containing predetermined module specific operations implementable on the module.

16. A system according to any one of claims 1 to 11 wherein the generating means comprises a hardware profile data structure containing hardware parameters for one or more of said resources.

17. A system according to any one preceding claim wherein the resources comprise one or more re-configurable hardware resources

18. A system according to any one preceding claim wherein the providing means comprises means for selecting one of a number of one of the following types of predetermined data structures: module specific commands data structure; module specific operations data structures; non-module specific functional description data structure.

19. A system according to claim 18 wherein the system further comprises means for communicating one or more of the operations, description, component or hardware data structures to the module.

20. A system according to any one preceding claim wherein the module is a wireless terminal or base station.

21. A system according to any one preceding claim wherein each command in the commands data structure is assigned a timestamp.

22. A signal processing module having a number of re-configurable resources and comprising:
means for providing a data structure corresponding to configuration commands for the resources;
means for reconfiguring the module using the data structure.

23. A module according to claim 24 wherein the providing means comprises means for wirelessly receiving said data structure.

24. A module according to claim 24 wherein the providing means comprises means for signalling said module to select said data structure.

25. A module according to any one of claims 22 to 24 wherein the module is a wireless terminal or base station.

26. A system for reconfiguring a signal processing module having a number of re-configurable resources and comprising:
means for providing to said module a data structure corresponding to configuration commands for the resources, such that the module is reconfigured using the data structure.

27. A system according to claim 26 wherein the providing means comprises means for wirelessly transmitting said date structure to said module.

28. A system according to claim 26 wherein the providing means comprises means for signalling said module to select said data structure.

29. A method of reconfiguring a signal processing module having a number of re-configurable resources, comprising:
providing a data structure corresponding to configuration commands for the resources;
reconfiguring the terminal using the data structure.

30. A method according to claim 29 wherein said providing comprises wirelessly receiving said data structure.

31. A method according to claim 29 wherein said providing comprises selecting said data structure.

32. A method according to any one of claims 29 to 31 wherein the data structure is a commands data structure comprising configuration commands for the resources

33. A method according to any one of claims 29 to 32 wherein the commands data structure comprises run-time commands.

34. A method according to any one of claims 29 to 33 wherein said providing comprises generating a module specific commands data structures from a non-module specific data structure.

35. A method according to any one of claims 29 to 34 wherein said generating comprises scheduling a module specific operations data structure to generate a commands data structure.

36. A method according to any one of claims 29 to 35 wherein said generating comprises compiling a non-module specific functional description data structure to generate a module specific operations data structure.

37. A method according to any one of claims 29 to 36 further comprising providing comprises a component library data structure containing predetermined module specific operations implementable on the module.

38. A method according to any one of claims 29 to 37 further comprising providing a hardware profile data structure containing hardware parameters for one or more of said resources.

39. A method according to any one of claims 29 to 38 wherein said providing comprises selecting one of a number of one of the following types of predetermined data structures: module specific commands data structure; module specific operations data structures; non-module specific functional description data structure.

40. A method of reconfiguring a signal processing module having a number of re-configurable resources and comprising:
wirelessly receiving a signal corresponding to a data structure corresponding to configuration commands for the resources;
reconfiguring the module using the data structure.

41. A method according to claim 40 wherein the signal comprises said data structure or instructions to select said data structure.

42. A method for reconfiguring a signal processing module having a number of re-configurable resources and comprising:
wirelessly transmitting a signal to said module corresponding to a data structure corresponding to configuration commands for the resources, such that the module is reconfigured using the data structure.

43. A method according to claim 42 wherein the signal comprises said data structure or instructions to select said data structure.

44. A computer program for implementing an apparatus according to any one of claims 1 to 28 or a method according to any one of claims 29 to 43.

45. A carrier medium carrying processor readable code for controlling a processor to carry out the method of any one of claims 29 to 43.
